Europäisches Patentamt

European Patent Office

Office européen des brevets

(19)

(11) Veröffentlichungsnummer : **0 072 951**
**B1**

(12) **EUROPÄISCHE PATENTSCHRIFT**

(45) Veröffentlichungstag der Patentschrift :
02.01.86

(51) Int. Cl.⁴ : **B 60 T 13/14**

(21) Anmeldenummer : **82107119.8**

(22) Anmeldetag : **06.08.82**

(54) **Hydraulische Steuereinrichtung.**

(30) Priorität : **27.08.81 DE 3133964**

(43) Veröffentlichungstag der Anmeldung :
**02.03.83 Patentblatt 83/09**

(45) Bekanntmachung des Hinweises auf die Patenterteilung : **02.01.86 Patentblatt 86/01**

(84) Benannte Vertragsstaaten :
**DE FR GB IT**

(56) Entgegenhaltungen :
**DE-A- 2 127 647**
**DE-A- 2 413 080**
**FR-A- 2 136 857**
**FR-A- 2 483 099**
**FR-A- 2 496 577**

(73) Patentinhaber : **ROBERT BOSCH GMBH**
**Postfach 50**
**D-7000 Stuttgart 1 (DE)**

(72) Erfinder : **Sandau, Hartmut**
**Ludwigsburgerstrasse 56**
**D-7141 Möglingen (DE)**

Jouve, 18, rue St-Denis, 75001 Paris, France

**Beschreibung**

Die Erfindung geht aus von einer hydraulischen Steuereinrichtung nach der Gattung des Hauptanspruchs. Bei einer derartigen bekannten Einrichtung erfolgt die Ansteuerung über das Bremspedal zum Ventilschieber der Steuereinrichtung mechanisch. Dabei sind mehrere Positionen des Ventilschiebers möglich, über den dann die Bremseinrichtung oder auch ein anderer Verbraucher mit Druckmittel versorgt werden können. Eine derartige Steuereinrichtung genügt bestimmten Anforderungen, sie ist jedoch nicht besonders feinfühlig, so daß beim Betätigen der Bremse Instabilitäten beim Aufbau des Bremsdrucks entstehen können (DE-A-2 127 647).

Es sind auch Bremseinrichtungen bekannt geworden, bei denen die Ansteuerung der Bremseinrichtung rein hydraulisch erfolgt, und zwar durch einen an einem Stromregelventil abgezweigten Steuerölstrom, der beim Betätigen des Bremspedals unterbrochen wird, um den Aufbau eines Bremsdrucks einzuleiten. Derartige Einrichtungen haben jedoch den Nachteil, daß bei Ausfall der Druckmittelquelle oder beim Festklemmen eines Steuerschiebers kein Druckmittel mehr zum Bremszylinder gelangt, so daß kein Bremsdruck zur Verfügung steht (FR-A-24 96 577).

Es ist eine Aufgabe der Erfindung, eine hydraulische Steuereinrichtung der eingangs genannten Art zu schaffen, mit der es möglich ist, durch rein hydraulische Ansteuerung einen stabilen Bremsdruckaufbau zu erreichen und bei Ausfall der Haupt-Druckmittelquelle trotzdem noch eine Möglichkeit zu schaffen, einen ausreichenden Bremsdruck zu erhalten.

Diese Aufgabe wird gemäß der Erfindung durch die im Kennzeichenteil des Hauptanspruchs gezeigten Mittel gelöst.

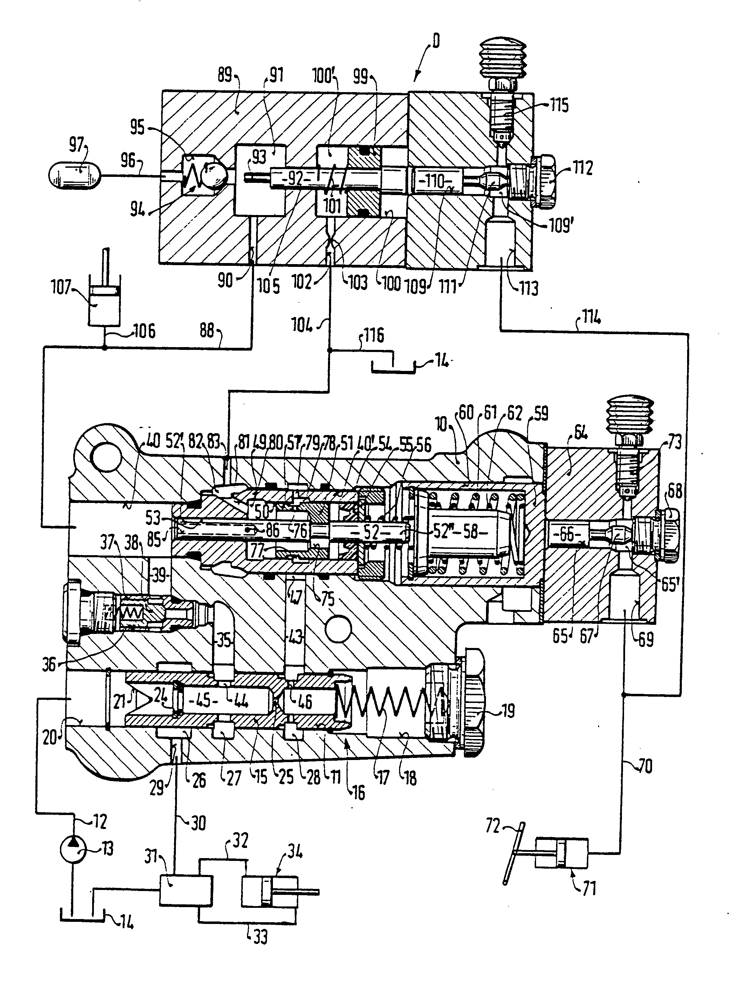

Ein Ausführungsbeispiel der Erfindung ist in der Zeichnung dargestellt und in der nachfolgenden Beschreibung näher erläutert. Die Zeichnung zeigt in teilweise schematischer Darstellung einen Längsschnitt durch eine hydraulische Steuereinrichtung.

Die Steuereinrichtung weist ein Ventilgehäuse 10 auf mit einer durchgehenden Längsbohrung 11, an welche eine Förderleitung 12 angeschlossen ist, in die eine Pumpe 13 aus einem Behälter 14 Druckmittel fördert. In der Längsbohrung 11 ist ein Steuerschieber 15 eines Stromregelventils 16 gleitend geführt, auf den entgegen dem einströmenden Druckmittel eine Reglerfeder 17 einwirkt. Der hintere Teil der Bohrung 18, in welchem die Reglerfeder angeordnet ist, ist durch eine Verschlußschraube 19 dicht abgeschlossen. Dem Einlaß 20 der Längsbohrung 11 zugewandt, sind an der Stirnseite des Steuerschiebers 15 Dreieckkerben 21 ausgebildet.

Im Innern des Steuerschiebers 15 ist eine Blende 24 angeordnet, stromabwärts von dieser eine Drossel 25 mit wesentlich kleinerem Durchmesser als dem der Blende 24. An der Längsbohrung 11 sind drei Ringnuten 26, 27, 28 ausgebildet. Von der Ringnut 26 verläuft eine Bohrung 29 zum Äußeren des Ventilgehäuses ; dort ist eine Verbraucherleitung 30 angeschlossen, die zu einem Steuerventil 31 führt. Von diesem führen Leitungen 32, 33 zu einem Verbraucher 34. In die Ringnut 27 mündet ein Kanal 35, in den eine Gehäusebohrung 36 eindringt, in welcher ein Ventileinsatz 37 mit kegeligem Rückschlagventil 38 eingesetzt ist. Von der Gehäusebohrung 36 geht ein Kanal 39 aus, der in eine parallel zur Längsbohrung 11 verlaufenden Längsbohrung 40 mündet.

Von der Ringnut 28 geht ein Kanal 43 aus, welcher in eine Ringnut 47 an einem erweiterten Teil 40′ der Längsbohrung 40 mündet. In den zwischen der Blende 24 und der Drosselbohrung 25 gelegenen Raum 45 im Steuerschieber münden mehrere Radialbohrungen 44, die in Höhe der Ringnut 27 liegen. Stromabwärts der Drosselbohrung 25 münden in den hohlen Steuerschieber mehrere Radialbohrungen 46, die in Höhe der Ringnut 28 liegen.

Im erweiterten Teil 40′ der Längsbohrung 40 ist ein becherförmiger Gehäuseeinsatz 49 angeordnet, in dessen Gehäusebohrung 50 ein Schieber 51 gleitend gelagert ist. An diesem ist ein Kolben 52 befestigt, dessen linker Teil 52′ dicht in einem achsgleich zur Gehäusebohrung 50 verlaufenden Bohrungsteil 53 gleitet, während sein rechter Teil 52″ durch eine Dichtmanschette 54 nach außen geführt ist. Die Dichtmanschette stützt sich an einer Scheibe 55 ab, gegen die sich auch eine um den rechten Teil 52″ des Kolbens gewickelte Feder 56 abstützt, deren anderes Ende an einem Federwiderlager 58 anliegt. Dieses Federwiderlager ist in einem Kolben 59 angeordnet, der in einer Bohrung 60 gleitend gelagert ist, die achsgleich zur Gehäusebohrung 40 verläuft. Auf das Federwiderlager wirken Federn 61, 62 ein. Die Bohrung 60 ist durch ein Gehäuse 64 verschlossen, in dem eine Längsbohrung 65 ausgebildet ist, die achsgleich zur Gehäusebohrung 40 verläuft. In der Längsbohrung 65 ist ein Kolben 66 dicht gleitend gelagert. Er hat einen Stößel 67, der sich gegen eine die Längsbohrung 65 verschließende Verschlußschraube 68 legt. In die Längsbohrung 65 mündet eine im Gehäuse 64 verlaufende Querbohrung 69, an welche eine Leitung 70 angeschlossen ist. Diese geht aus von einem Druckgeber 71, der durch ein Bremspedal 72 betätigbar ist. An die Längsbohrung 65 ist noch eine Entlüftungsvorrichtung 73 angeschlossen.

Die Ringwand 51′ des Schiebers 51 ist durch eine Querbohrung 76 durchbrochen, die Stirnwand durch eine Bohrung 75 ; erstere mündet in eine Ringnut 77, die mit einer Ringnut 78 im Gehäuseeinsatz 49 zusammenwirkt. Die beiden Ringnuten 77, 78 stehen über eine die Wand des Gehäuseeinsatzes 49 durchdringende Querbohrung 79 miteinander in Verbindung und damit mit dem Kanal 43. Vom Raum 80 innerhalb des Gehäuseeinsatzes 49 verläuft eine Schrägbohrung 81 in eine Ringnut 82 des Bohrungsteils 40' der Gehäusebohrung 40. Von der Ringnut 82 verläuft eine Bohrung 83 zum Äußeren des Gehäuses. Im linken TeiL 52' des Kolbens 52 befindet sich eine Längsbohrung 85, von der eine Querbohrung 86 nach außen verläuft und in einer bestimmten Stellung des Schiebers 51 Verbindung zum Raum 80 hat. Von der Längsbohrung 40 führt eine Leitung 88 zu einem Gehäuse 89 einer Zusatzbremseinrichtung D und mündet dort in eine Bohrung 90, welche wiederum in einem im Gehäuse 89 ausgebildeten Zylinderraum 91 mündet. In diesen ragt ein Kolben 92 mit Stößel 93, der einem Rückschlagventil 94 zugewandt ist, das in einer Gehäusebohrung 95 angeordnet ist. Von dieser verläuft eine Leitung 96 zu einem Druckspeicher 97. Der Kolben 92 ist mit einem Kolben 99 verbunden, der in einer Bohrung 100 des Gehäuses 89 dicht gleitend angeordnet ist. Auf ihn wirkt eine im Raum 100' angeordnete Feder 101. Von diesem Raum geht eine eine Drossel 103 enthaltene Bohrung 102 aus, die mit einer Leitung 104 verbunden ist, die zur Bohrung 83 des Ventilgehäuses 10 führt. An die Leitung 88 ist eine Leitung 106 angeschlossen, die zu einem Bremszylinder 107 führt. Wesentlich ist, daß der Kolben 92 denselben Durchmesser hat wie der linke Teil 52' des Kolbens 52.

In einer achsgleich zur Gehäusebohrung 105 verlaufenden Bohrung 109 ist ein auf den Kolben 92 einwirkender Kolben 110 gleitend gelagert, der denselben Durchmesser hat wie der Kolben 66 im Gehäuse 64. Er ist auch ebenso ausgebildet und hat einen Stößel 111, der sich an eine die Bohrung 109 verschließende Verschlußschraube 112 anlegt. In die Bohrung 109 mündet eine Querbohrung 113, von der eine Leitung 114 zur Leitung 70 führt. Außerdem ist an die Bohrung 109 noch eine Entlüftungsvorrichtung 115 angeschlossen. Von der Bohrung 104 zweigt eine Bohrung 116 ab und führt zum Behälter 14.

Die Steuereinrichtung arbeitet wie folgt : Die Pumpe 13 fördert Druckmittel über den Einlaß 20 in die Längsbohrung 11, wobei dieses auch in das Innere des Steuerschiebers gelangt. Ein Teil dieses Druckmittels fließt über die Blende 24 und die Drosselbohrung 25 in den Raum 18. Über die Drosselbohrung 25 fließt ein Steuerölstrom zur Querbohrung 46, von dieser in die Ringnut 28 und den Kanal 43, von dort über die Ringnut 47 in die Querbohrung 79 des Gehäuseeinsatzes 49 und dann in die Ringnuten 77, 78 und die Querbohrung 76 in den Raum 80. Von dort fließt das Druckmittel über die Schrägbohrung 81 und die Leitungen 104 und 116 zum Behälter 14 ab.

Durch den Durchflußwiderstand an der Blende 24 und die dabei erzeugte Druckdifferenz wird der Steuerschieber 15 entgegen der Kraft der Reglerfeder 17 nach rechts verschoben und stellt über die Dreieckskörper 21 Verbindung zur Ringnut 26 und zur Leitung 30 her. Druckmittel kann nun zum Verbraucher 34 fließen.

Vor Fahrtbeginn muß der Druckspeicher 97 aufgeladen werden. Zu diesem Zweck wird das Bremspedal 72 betätigt. Dadurch baut sich in der Leitung 70 und den Bohrungen 69 und 65 Druck auf, und der Kolben 66 wird entgegen dem Kolben 49 nach links verschoben. Das Federwiderlager 58 drückt auf den Kolben 52, wodurch dieser nach links verschoben wird samt dem Schieber 51. Dadurch wird die Verbindung vom Kanal 43 zum Raum 80 unterbrochen, so daß kein Steueröl mehr zum Behälter 14 abfließen kann. Daraufhin baut sich im Raum 18 Druck auf, und der Steuerschieber 15 bewegt sich nach links, wodurch die Querbohrungen 44 mit der Ringnut 27 in Verbindung kommen. Nun kann auch ein Teil des von der Pumpe 13 geförderten Druckmittels in den Kanal 35 und über das sich öffnende Rückschlagventil 38 in den Kanal 39 gelangen, weiterhin von dort in die Längsbohrung 40 sowie in die Leitung 88. Von hier strömt das Druckmittel in den Zylinderraum 91 und über das sich öffnende Rückschlagventil 94 zum Druckspeicher 97 und lädt ihn auf. Wenn dieser genügend aufgeladen ist — Anzeige beispielsweise durch ein Manometer — wird der Fuß vom Bremspedal 72 genommen. Das Rückschlagventil 94 legt sich wieder auf seinen Sitz und der Druck im Zylinderraum 91 und dem Bremszylinder 107 kann sich über die Leitung 88 und die Bohrungen 85, 86 sowie die Bohrung 81 und die Leitungen 104 und 116 abbauen. Durch Entlastung des Druckgebers 71 baut sich auch der Druck in den Räumen 109' und 65' ab und der Kolben 59 wird zurückgeschoben, so daß der Kolben 52 wieder in seine Ausgangslage zurückkehrt. Nun kann Druckmittel (Steueröl) wieder über die Drosselbohrung 25 im Steuerschieber 15 — wie zuvor geschildert — zum Behälter abströmen. Dadurch bewegt sich der Steuerschieber 15 entgegen der Kraft der Reglerfeder nach rechts und verschließt den Druckmittelzulauf von den Bohrungen 44 zur Ringnut 27. Alles von der Pumpe geförderte Druckmittel kann dem Verbraucher 34 zugeleitet werden.

Soll das Fahrzeug gebremst werden, so wird das Bremspedal 72 bedient. Der Druckgeber erzeugt wiederum Druck in den Räumen 65' und 109' über die Leitungen 70 und 114. Der Bremsdruck baut sich auch im Zylinderraum 91 auf. Da die Kolben 52 und 92 denselben Durchmesser haben und vom selben Druck beaufschlagt sind, und auch die Kolben 66 und 110 wohl einen anderen, aber ebenfalls wieder denselben Durchmesser haben und vom selben Druck beaufschlagt sind, bleibt der Kolben 92 in seiner zurückgezogenen Lage, die durch die vorgespannte Feder 101 gegeben ist. Bei jeder Vollbremsung wird der Druckspeicher 92 — falls Druckabfall vorliegt — nachgeladen. Durch den Kolben 66 wird der Schieber 51 wieder nach links verschoben, so daß durch Unterbrechen des Steuerölstroms und durch Bewegung des Steuerschiebers 15 nach links Druckmittel über das Rückschlagventil 38 und die Leitung 88 in den Bremszylinder 107 gelangen kann.

Steht bei einem Bremsvorgang aus irgend einem Grund, z. B. durch Ausfall der Pumpe 13, in der Leitung 88 kein Bremsdruck zur Verfügung, so kann sich auch im Zylinderraum 91 kein Druck aufbauen. Nun kann der vom Druck in der Leitung 114 beaufschlagte Kolben 110 den Kolben 92 entgegen der Kraft der Feder103 nach links bewegen, worauf der Stößel 93 das Rückschlagventil 94 von seinem Sitz abhebt. Jetzt fließt Druckmittel aus dem Druckspeicher 97 und die Leitung 88 in den Bremszylinder 107 und kann den Bremsvorgang auslösen.

Steht im Druckspeicher nicht mehr genügend Druck zur Verfügung, so kann dies beispielsweise durch eine Warnleuchte gemeldet werden und der Druckspeicher wird — wie eingangs beschrieben — durch Bremsung des Fahrzeugs aufgeladen. Die Drossel 103 dient als Dämpfdrossel für die Bewegung des Kolbens 99 und sorgt dafür, daß bei kurzzeitigen Druckunterschieden in den Leitungen 88 und 114 keine großen Auslenkungen am Steuerschieber 92 auftreten.

## Patentansprüche

1. Hydraulische Steuereinrichtung für eine Bremsanlage, welche Steuereinrichtung das von einer Druckmittelquelle geförderte Druckmittel über ein Stromregelventil (16) einem Druckspeicher (97) und/oder einem Verbraucher (34) zuführt, mit einer über eine Bremsleitung (88) hydraulisch ansteuerbaren Bremseinrichtung mit einem Bremszylinder (107), bei deren Aktivierung ein vom Stromregelventil abgezweigter Steuerölstrom unterbrochen wird, worauf in der Bremseinrichtung ein Bremsdruck aufgebaut wird, wobei an die Bremsleitung eine Zusatzbremseinrichtung (D) angeschlossen ist, mit einem Betätigungsglied (92), das beim Ausbleiben des Bremsdrucks in der Bremseinrichtung ein Ventil (94) betätigt, über das eine Verbindung vom Druckspeicher (97) zum Bremszylinder hergestellt wird, dadurch gekennzeichnet, daß in der Bremseinrichtung und der Zusatzbremseinrichtung jeweils ein von der Bremsleitung (70, 114) ansteuerbarer Betätigungskolben (66, 110) mit demselben Durchmesser angeordnet ist, dem jeweils ein Gegenkolben (52, 92) entgegenwirkt, welche ebenfalls denselben Durchmesser aufweisen, der jedoch kleiner oder größer ist als derjenige der Betätigungskolben und daß diese Kolben über eine Steuerleitung (88) mit dem Bremszylinder (107) verbunden sind.

2. Steuereinrichtung nach Anspruch 1, dadurch gekennzeichnet, daß der Gegenkolben (92) in der Zusatzbremseinrichtung (D) ein Dämpfungseinrichtung aufweist, bestehend aus einem auf ihm angeordneten, federbelasteten Kolben (99) und einer an den diesen Kolben aufnehmenden Raum (100) angeschlossenen Drossel (103), die in einer Verbindung von diesem Raum zu einem Behälter (14) angeordnet ist und daß der Gegenkolben mit dem als Rückschlagventil ausgebildeten Ventil (94) zusammenwirkt, über das stromabwärts der Druckspeicher (92) angeordnet ist.

## Claims

1. Hydraulic control apparatus for a brake installation, which control apparatus feeds the pressurised medium delivered from a pressurised medium source *via* a flow regulating valve (16) to a pressure accumulator (97) and/or to a consumer (34), with a brake device hydraulically modulable *via* a brake pipe (88) with a brake cylinder (107), upon the actuation of which a control oil stream branched from the flow-regulating valve is interrupted, whereupon a brake pressure is built up in the brake device, whilst an auxiliary brake device (D) is connected to the brake pipe, with an actuating member (92), which upon cessation of the brake pressure in the brake device actuates a valve (94) *via* which a connection is established from the pressure accumulator (97) to the brake cylinder, characterised in that an actuating piston (66, 110) of the same diameter and modulable from the brake pipe (70, 114) is arranged in each of the brake device and the auxiliary brake device, each actuating piston being counteracted by a counterpiston (52, 92), which likewise exhibits the same diameter, but which is smaller of greater than that of the actuating pistons, and that these pistons are connected *via* a control pipe (88) to the brake cylinder (107).

2. Control apparatus according to Claim 1, characterised in that the counterpiston (92) in the auxiliary brake device (D) exhibits an attenuating device consisting of a spring-loaded piston (99) arranged on it and of a throttle (103) connected to the space (100) accommodating this piston, which throttle is arranged in a connection from this space to a tank (14), and that the counterpiston cooperates with the valve (94) constructed as a non-return valve, *via* which the pressure accumulator (92) is arranged downstream.

## Revendications

1. Dispositif hydraulique de commande pour une installation de freinage, ce dispositif de commande amenant, par l'intermédiaire d'un régulateur de débit (16), le fluide sous pression refoulé à partir d'une source de fluide sous pression à un accumulateur hydraulique (97) et/ou à un appareil utilisateur (34), avec un dispositif de frein susceptible d'être commandé hydrauliquement par l'intermédiaire d'une canalisation de frein (88) et comportant un cylindre de frein (107), lors de l'activation duquel un débit d'huile de commande dérivé du régulateur de débit est interrompu, grâce à quoi une pression de freinage est établie dans le dispositif de frein, un dispositif de frein supplémentaire (D) étant raccordé à la canalisation de frein avec un organe de manœuvre (92) qui, en cas d'absence de pression de freinage dans le dispositif de frein, actionne une soupape (94) par l'intermédiaire de laquelle une liaison est réalisée entre l'accumulateur hydraulique (97) et le cylindre de frein, dispositif de commande caractérisé en ce que dans le dispositif de frein et dans le dispositif de frein supplémentaire, il est respectivement prévu un piston de manœuvre (66, 110) de même diamètre, susceptible d'être commandé à partir de la canalisation de frein (70, 114), et contre lequel agit respectivement un piston antagoniste (52, 92), ces pistons antagonistes ayant également le même diamètre, ce diamètre étant toutefois plus petit ou plus grand que celui des pistons de manœuvre et ces pistons antagonistes étant reliés par l'intermédiaire d'une canalisation de commande (88) au cylindre de frein (107).

2. Dispositif de commande selon la revendication 1, caractérisé en ce que le piston antagoniste (92) dans le dispositif de frein supplémentaire (D) comporte un dispositif d'amortissement constitué par un piston (99), disposé sur lui et sollicité par un ressort, et d'un étranglement (103) raccordé à la chambre (100) où est logé ce piston, cet étranglement étant disposé sur une liaison entre cette chambre et un réservoir (14), le piston antagoniste coopérant avec la soupape (94) revêtant la forme d'une soupape de retenue, et par l'intermédiaire de laquelle l'accumulateur hydraulique (92) est monté en aval.